# EUROPEAN PATENT APPLICATION

(11) **EP 2 579 433 A1**
(43) Date of publication of application: **10.04.2013**
(21) Application number: 11786677.2
(22) Date of filing: 25.05.2011
(51) Int. Cl.: H02K 17/16

(54) **ROTOR OF INDUCTION MOTOR, AND INDUCTION MOTOR USING SAME**

(30) Priority: 27.05.2010 JP 2010121987
(71) Applicant: Yazaki Corporation, Minto-ku Tokyo 108-0073 (JP)
(72) Inventor: IIZUKA, Hiroshi, Susono-shi Shizuoka 410-1107 (JP); KATSUMATA, Makoto, Susono-shi Shizuoka 410-1107 (JP); SAIGOU, Tsutomu, Susono-shi Shizuoka 410-1107 (JP); YOSHINAGA, Satoru, Susono-shi Shizuoka 410-1107 (JP)
(74) Representative: HOFFMANN EITLE
(86) International application number: PCT/JP2011/061989
(87) International publication number: WO 2011/148978

(57) **Abstract**

A rotor (4) of an induction motor (1) rotatably disposed inside a hollow portion (3) of a stator (2) of the induction motor (1) and rotating under a magnetic force from a magnetic field formed inside the hollow portion (3) by the stator (2). The rotor (4) includes a pair of annular conductors (10, 10), and a plurality of bar-like conductors (11) connected between the pair of annular conductors (10, 10) and configured to form a basket shape along with the pair of annular conductors (10, 10). The annular conductors (10, 10) and the bar-like conductors (11) are respectively formed by a compound material with a conductive core conductor (12) and a carbon nanotube structure (15) attached to an outer periphery of the core conductor (12) in an electric contact state.

## Description

### Technical Field

The present invention relates to an induction motor, and particularly, a rotor of an induction motor which rotates by electromagnetic induction while receiving a magnetic force of a magnetic field generated by a stator and an induction motor using the same.

### Background Art

An induction motor that is disclosed in Patent Literatures 1 and 2 includes a stator which generates a rotation magnetic field inside a hollow portion and a rotor which is rotatably disposed inside the hollow portion of the stator and rotates by receiving a magnetic force of a magnetic field generated by the stator.

The stator includes a stator core which has a hollow portion therein and a stator coil which is wound on the inner peripheral portion of the stator core, and when a current flows to the stator coil, a magnetic field is formed inside the hollow portion.

The rotor is formed by integrally forming a core portion and a basket-like conductor portion with a rotary shaft. The basket-like conductor portion includes a pair of annular conductors (end rings) and a plurality of bar-like conductors (conductor bars) formed between the pair of annular conductors.

Then, when the rotor is rotatably disposed inside the hollow portion of the stator and a current flows to the stator coil, a magnetic field generated from the stator coil is applied to the rotor. Then, a current (an eddy current) is generated in the bar-like conductors due to the magnetic field, and an electromagnetic force is generated in the rotor due to the current generated in the bar-like conductors and the magnetic field from the stator. The rotor rotates by the electromagnetic force generated in the rotor. In this case, a high-frequency current flows to the bar-like conductors due to the magnetic field formed by the stator when activating the induction motor.

Compared to a DC motor or a synchronous motor using a permanent magnet, such an induction motor may be formed in a simple and robust structure and does not need a complex control. Accordingly, there are advantages that the induction motor may be easily used and may handle a constant speed and a variable speed at a comparatively low cost.

### Citation List

### Patent Literature

Patent Literature 1: JP 6-165451 A
Patent Literature 2: JP 10-32966 A

### Summary of Invention

Incidentally, as described above, when a high-frequency current flows to the bar-like conductors at the activation time, the current density on the surfaces of the bar-like conductors increases due to the skin effect, and hence the high- frequency current concentrates on the surface. Accordingly, the high-frequency current flows to the small cross-sectional area of the surface. For this reason, the electrical resistance increases, heat is generated by an increase in the electrical resistance value, and then thermal loss occurs. As a result, in the induction motor, the shaft output of the rotor decreases with respect to the input power due to the thermal loss, and hence a problem arises in that the efficiency is poor.

Further, since heat is generated by the current concentrating on the surface of the rotor due to the skin effect, the heat needs to be radiated to the outside. Accordingly, there is a need to provide heat radiation fins on the outer periphery of the induction motor, and hence a problem arises in that the induction motor increases in size.

It is an object of the invention to provide a rotor of an induction motor capable of reducing thermal loss of an induction motor by decreasing an electrical resistance on the surface of the rotor and of decreasing the size thereof and an induction motor using the same.

A first aspect of the present invention is a rotor of an induction motor which is rotatably disposed inside a hollow portion of a stator of the induction motor and rotates under a magnetic force from a magnetic field formed inside the hollow portion by the stator, the rotor including a pair of annular conductors, and a plurality of bar-like conductors connected between the pair of annular conductors and configured to form a basket shape along with the pair of annular conductors, wherein the annular conductors and the bar-like conductors are respectively formed by a compound material with a conductive core conductor and a carbon nanotube structure attached to an outer periphery of the core conductor in an electric contact state.

According to a first aspect, the annular conductors and the bar-like conductors of the rotor of the induction motor are formed as the compound material in which the carbon nanotube structure is attached to the outer periphery of the core conductor in an electric contact state. Accordingly, even when the high-frequency current flows to the bar-like conductors when activating the induction motor and the current density concentrates on the surfaces of the bar-like conductors due to the skin effect, the generation of heat is suppressed since the electrical resistance of the surface portion is small due to the excellent conductivity of the carbon nanotube, and hence the thermal loss may be decreased. Accordingly, since a decrease in the shaft output with respect to the input power in the induction motor may be decreased, the efficiency improves.

Further, since the generation of the heat of the rotor is suppressed, the heat radiation fins are not needed, and hence the induction motor may be decreased in size.

The core conductor may be a copper bar or an aluminum bar.

According to the above-described configuration, copper or aluminum generally used as the bar-like conductors in the induction motor is used as the core conductor and the carbon nanotube structure is attached to the outer periphery thereof. Accordingly, even when the diameter of the core conductor decreases, the same performance as that of the induction motor of the related art may be obtained when using the induction motor at a constant rotation speed.

The carbon nanotube structure may be formed by an assembly of a plurality of carbon nanotubes, subjected to a wettability improvement treatment by attaching a conductor formed by nano metal particles onto surfaces of the respective carbon nanotubes, into the respective carbon nanotubes, and between the respective carbon nanotubes, and impregnated with aluminum or treated by compact-molding of aluminum in a state where the carbon nanotube structure is attached onto the outer periphery of the core conductor in a braided shape.

According to the above-described configuration, the conductor is attached onto the surfaces of the carbon nanotubes, into the carbon nanotubes, and between the carbon nanotubes, and hence electrons more easily enter the carbon nanotube. Accordingly, since the electrons flow at a high speed, the conductivity may be improved. Further, since the conductor is attached between the carbon nanotubes, electrons may easily enter from one carbon nanotube into the other carbon nanotube. Further, since the electrons may flow at a high speed, the conductivity may be further improved.

Further, the carbon nanotube structure is formed in a braided shape and is impregnated with aluminum or is formed by compact-molding while being attached onto the outer periphery of the core conductor. Accordingly, a satisfactory electrical contact state may be obtained between the carbon nanotube structure and the aluminum and between the aluminum and the core conductor.

The carbon nanotube structure may be formed by an assembly of a plurality of carbon nanotubes, subjected to a wettability improvement treatment by attaching a conductor formed by nano metal particles onto surfaces of the respective carbon nanotubes, into the respective carbon nanotubes, and between the respective carbon nanotubes, and transversely wound on the outer periphery of the core conductor while being impregnated with aluminum or being treated by compact-molding of aluminum.

According to the above-described configuration, since electrons more easily enter the carbon nanotube and flow at a high speed, the conductivity may be improved. Since the electrons may more easily enter from one carbon nanotube into the other carbon nanotube and may flow at a high speed, the conductivity may be improved.

Further, since the impregnation of the aluminum is performed, a satisfactory electrical contact state may be obtained between the carbon nanotube structure and the aluminum and between the aluminum and the core conductor.

A second aspect of the present invention is an induction motor including a stator configured to form a magnetic field inside a hollow portion thereof, and a rotor rotatably disposed inside the hollow portion of the stator and configured to rotate under a magnetic force from the magnetic field formed by the stator, wherein the rotor includes a pair of annular conductors and a plurality of bar-like conductors connected between the pair of annular conductors, wherein the pair of annular conductors and the plurality of bar-like conductors form a basket shape, and wherein the annular conductors and the bar-like conductors are respectively formed by a compound material with a conductive core conductor and a carbon nanotube structure attached to an outer periphery of the core conductor in an electric contact state.

According to the second aspect, the same effect as that of the first aspect may be obtained.

### Brief Description of Drawings

FIG. 1 illustrates an induction motor, where FIG. 1(a) is a cross-sectional view thereof, FIG. 1(b) is a perspective view illustrating a rotor, and FIG. 1(c) is a perspective view illustrating a basket of the rotor.
FIG. 2 is a perspective view illustrating a compound material in which a spun carbon nanotube is attached in a braided shape to a surface of a copper bar.
FIG. 3 illustrates a compound material in which a spun carbon nanotube is attached to a surface of a copper bar and the spun carbon nanotube is impregnated with aluminum, where FIG. 3(a) is a perspective view thereof and FIG. 3(b) is a cross-sectional view thereof.
FIG. 4 is a diagram illustrating a state where conductors (nano-metal particles) are attached to a carbon nanotube.
FIG. 5 illustrates a first modified example and is a perspective view illustrating a compound material in which a spun carbon nanotube is attached to a surface of a copper bar by transverse winding.
FIG. 6 illustrates a second modified example and illustrates a compound material in which a spun carbon nanotube impregnated with aluminum is attached to a surface of a copper bar, where FIG. 6(a) is a perspective view illustrating the compound material in which the carbon nanotube is impregnated with the aluminum, FIG. 6 (b) is a perspective view illustrating the copper bar, and FIG. 6 (c) is a perspective view illustrating a state where the copper bar is press-inserted into a hollow portion of the compound material.
FIG. 7 is a cross-sectional view comparatively illustrating diameters of the copper bar and the compound material in which the carbon nanotube is attached to the surface of the copper bar.

### Description of Embodiments

Hereinafter, a rotor of an induction motor according to an embodiment of the invention will be described in detail based on the drawings.

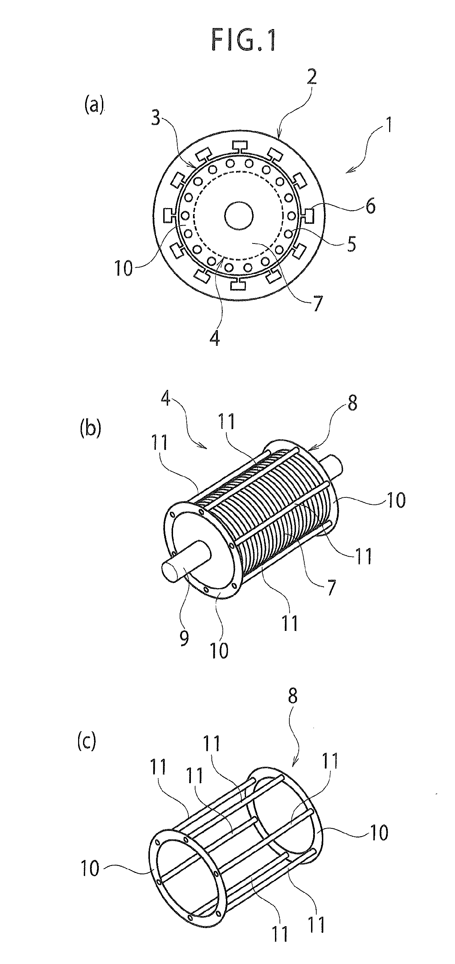

As illustrated in FIG. 1 (a), an induction motor 1 includes a stator 2 which generates a rotation magnetic field and a rotor 4 which is rotatably disposed inside a hollow portion 3 of the stator 2 and rotates by receiving an electromagnetic force caused by the rotation magnetic field generated by the stator 2.

The stator 2 includes a stator core 6 which has a hollow portion 5 formed therein in a cylindrical shape and a stator coil (not illustrated) which is wound on the inner peripheral portion of the stator core 6, and a magnetic field is formed in the hollow portion 3 by a current flowing to the stator coil. A high-frequency induction current flows to the rotor 4 by the magnetic force from the magnetic field, and a rotational force is generated by the induction current and the magnetic field generated by the stator 2, thereby rotating the rotor 4 inside the hollow portion 3.

As illustrated in FIG. 1(b), the rotor 4 is formed by integrally forming a core portion 7 and a basket-like conductor portion 8 with a rotary shaft (an output shaft) 9. As illustrated in FIG. 1(c), the basket-like conductor portion 8 includes a pair of annular conductors (hereinafter, referred to as "end rings") 10 and 10 and a plurality of bar-like conductors (hereinafter, referred to as "conductor bars") 11 which are connected between the pair of end rings 10 and 10.

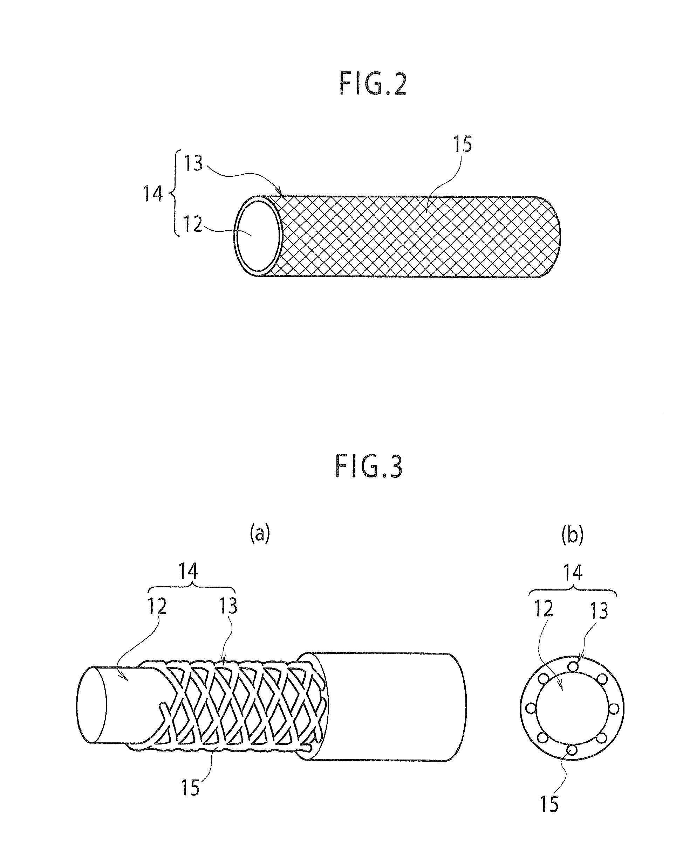

As illustrated in FIGS. 2 and 3, the end rings 10 and 10 and the conductor bars 11 of the embodiment are formed as a compound material 14 with a conductive core conductor 12 and a carbon nanotube structure 13 which is attached to the outer periphery of the core conductor 12 in an electrical contact state and is formed of a carbon nanotube (hereinafter, simply referred to as a "CNT") 15.

The core conductor 12 is formed by a copper core material which is formed as a copper bar or an aluminum core material which is formed as an aluminum bar, and in any material, the conductivity is high, the current density resistance is high, and the high heat conductivity is excellent. In the example of the embodiment, the core conductor is formed by the copper core material which is formed from the copper bar. The carbon nanotube structure 13 which is formed from the CNT 15 formed in a braided shape is attached to the outer periphery of the copper core material, and is impregnated with aluminum in this state.

Here, the CNT 15 is a structure in which a hexagonal shape obtained by binding six carbons is further bound to the other hexagonal shape so as to have a cylindrical shape, a fiber CNT is formed from the plurality of CNTs 15. A tangled fiber CNT is extended from the assembly of the plurality of fiber CNTs so as to be evenly arranged, and the result is twisted so as to become a thread having a uniform thickness, thereby forming a spun CNT. In the embodiment, the fiber CNT, the assembly of the fiber CNT, and the spun CNT are referred to as the CNT structure 13.

Further, since the binding force between the CNTs 15 is weak and the contact resistance between the CNTs 15 is large, in the compound material 14 of the embodiment, a wettability improvement treatment which improves so-called wettability is performed on the CNT 15 by attaching metal nano particles (conductors) onto the surfaces of the CNTs 15, into the CNTs 15, and between the CNTs 15 in a nano scale.

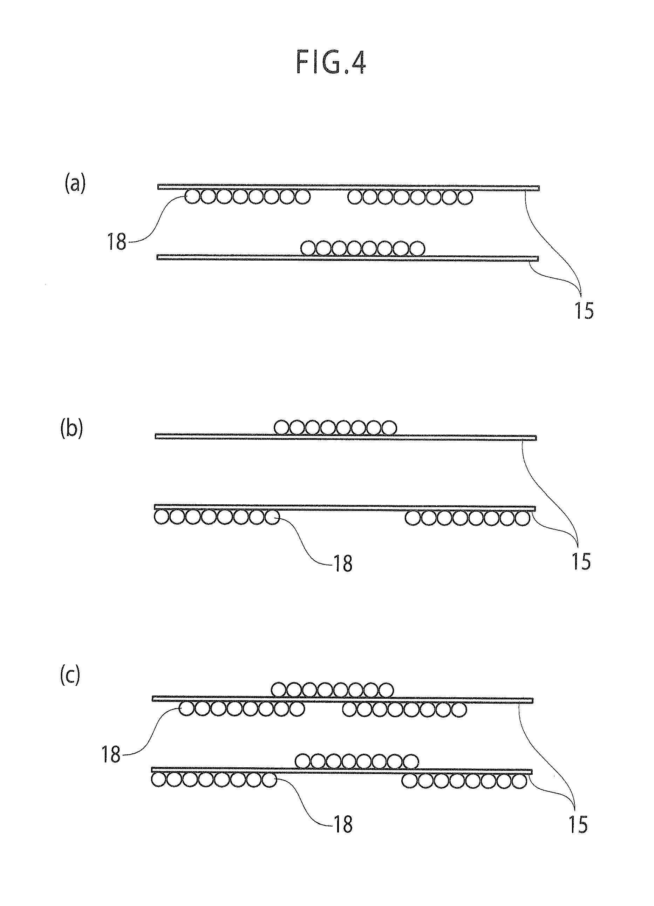

By using the technique of "organized assembly of carbon and non-carbon and manufacturing method thereof" disclosed in Japanese Patent Application National Publication (Laid-Open) No. 2009-535294 as a method of the wettability improvement treatment, non-carbon materials (Fe, Si, Co, Cr, Mn, Mo, Nb, Ta, Th, Ti, U, V, Y, and Zr) which are formed from the metal nano particles 18 are attached onto the surfaces of the CNTs 15, into the CNTs 15, and between the CNTs 15 as illustrated in FIG. 4. Accordingly, since it is assumed that the CNTs 15 are strongly bound (covalently bonded) to each other by the metal nano particles 18 and a low resistance is obtained between the metal nano particles 18, the resistance between the CNTs 15 becomes low. That is, when electrons pass through the CNTs 15 and move to the adjacent CNT 15 through the metal nano particles 18, the conductivity between the CNTs 15 is high since the resistance between the CNTs 15 is low. Accordingly, when the electrical contact resistance decreases by strengthening the binding force between the unit CNTs in a manner such that the metal nano particles 18 as binder are attached between the CNTs 15, the high conductivity between the CNTs 15 may be obtained.

Further, the metal nano particles 18 which are attached onto the surfaces of the CNTs 15 may obtain high conductivity since electrons pass through the metal nano particles 18, easily pass through the CNTs 15, and become more easily flow by the metal nano particles 18 which are attached into the CNTs 15.

The tangled fiber CNT is extended from the assembly of the fiber CNT which are formed from the CNTs 15 so as to be evenly arranged, and the result is twisted so as to become a thread having a uniform thickness. Accordingly, the spun CNT is attached onto the surface (the outer periphery) of the copper core material in a braided shape.

In a state where the braided CNT structure 13 is attached onto the outer periphery of the copper core material as the core conductor 12, the CNT structure 13 is impregnated with the aluminum 16. In order to impregnate the spun CNT forming the CNT structure 13 with the aluminum 16, the spun CNT is impregnated with the aluminum 16 in accordance with the vacuum-pressure impregnating method. In this case, the spun CNT (the CNT structure 13) may be impregnated with the aluminum 16 by using the technique of "compound material and manufacturing method thereof" disclosed in JP 2001-107203 A, the technique of "compound material" disclosed in JP 2002-59257 A, and the technique of "compound material and manufacturing method thereof" disclosed in JP 2002-194515 A.

Accordingly, the compound material 14 is formed from the core conductor 12 and the CNT structure 13, and the end rings 10 and the conductor bars 11 of the induction motor 1 are formed by the compound material 14.

### <First modified example>

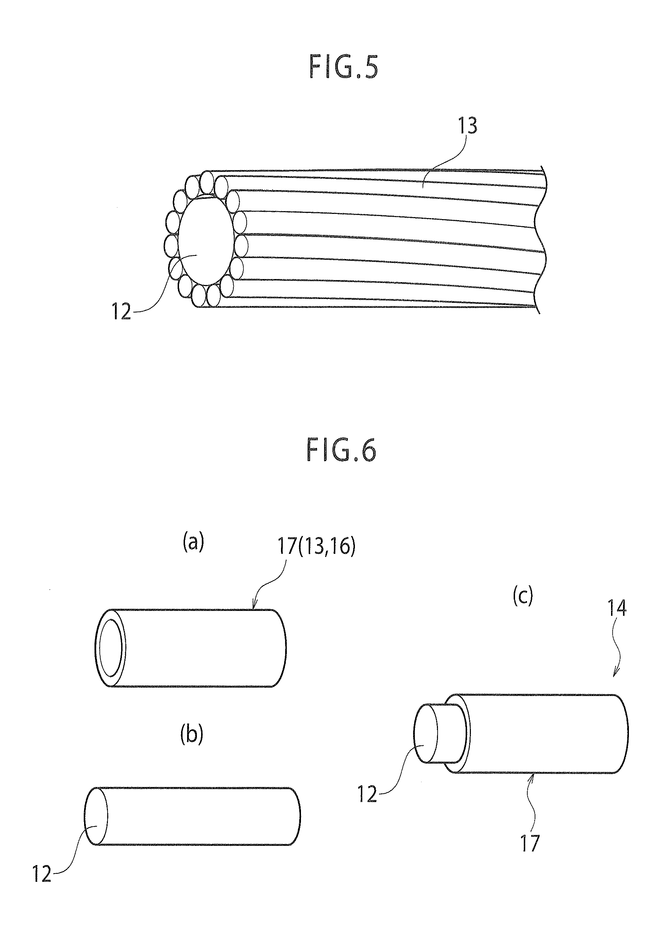

In the above-described embodiment, a braid is formed by attaching the CNT structure 13 in a braided shape onto the outer periphery of the core conductor 12 which is formed from the copper core material, but in a first modified example, the CNT structure 13 is attached by transverse winding onto the outer periphery of the core conductor 12 which is formed from the copper core material as illustrated in FIG. 5. In this way, in a state where the CNT structure 13 is attached by transverse winding onto the outer periphery of the core conductor 12 which is formed from the copper core material, the CNT structure is impregnated with the aluminum 16 by the vacuum-pressure impregnating method as in the above-described embodiment.

### <Second modified example>

In the above-described embodiment, the CNT structure 13 is attached onto the outer periphery of the core conductor 12 and is impregnated with the aluminum 16, but in a second modified example, in a state where the wettability improvement treatment is performed on the CNT 15 as in the above-described embodiment, a compound material 17 which is obtained by impregnating the assembly of the fiber of the CNT 15 with the aluminum 16 through the vacuum-pressure impregnating method as in the above-described embodiment is molded in a cylindrical shape (a tubular shape) as illustrated in FIG. 6(a), and the core conductor 12 which is formed from the copper core material illustrated in FIG. 6 (b) is press-inserted into the cylindrical compound material 17 obtained by impregnating the assembly of the CNT fiber with the aluminum 16 as illustrated in FIG. 6 (c), thereby forming the compound material 14 with the core conductor 12 and the compound material 17.

Furthermore, in the second modified example, the core conductor 12 is press-inserted into the compound material 17 of the cylindrical CNT structure 13 impregnated with the aluminum 16, but the inner surface of the compound material 17 of the cylindrical CNT structure 13 impregnated with the aluminum 16 may adhere to the surface of the copper core material by squeezing the inside of the cylindrical compound material 17 through swaging.

As described above, according to the induction motor 1 of the embodiment, when the end rings 10 and 10 and the conductor bars 11 are formed by the compound material 14 which is formed with the conductive core conductor 12 and the CNT structure 13 attached to the outer periphery of the core conductor 12 in an electric contact state, even when a high-frequency current generated by the electromagnetic induction flows to the surfaces of the end rings 10 and 10 and the conductor bars 11, the resistance may be decreased since the CNT structure 13 formed by the CNTs 15 having high conductivity is attached to the surface.

Further, since the electrical resistance of the surface may be decreased, even when the high-frequency current concentrates on the surface due to the skin effect, the heat generation amount is small, and hence thermal loss is reduced. In addition, since the heat generation amount decreases and the heat radiation performance becomes satisfactory, the heat radiation fin which is needed in the induction motor in the related art may be decreased in size or removed. Accordingly, the induction motor may be decreased in size, and for example, when the induction motor is used in the vehicle, a space necessary for mounting the induction motor may be decreased. Furthermore, since a decrease in weight may be realized by a decrease in size, a decrease in the weight of the vehicle may be caused when the induction motor is provided in the vehicle.

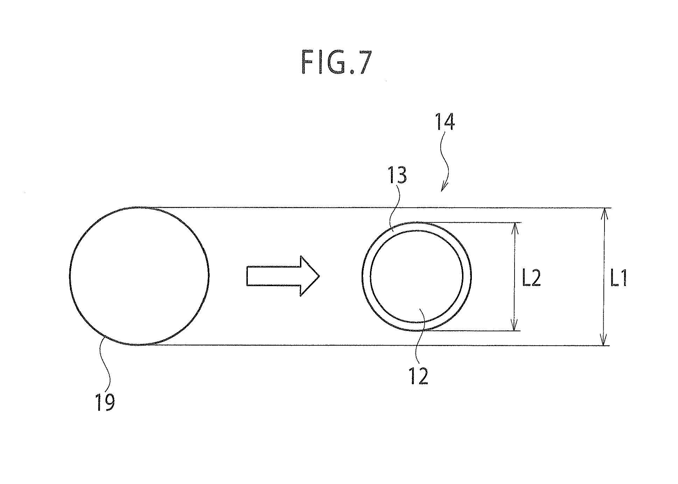

In addition, since the CNT structure 13 is lighter than the other conductor (aluminum or copper), when the conductor bars 11 or the end rings 10 have the same necessary diameter when using the copper core material, the diameter of the copper core material may be decreased by the degree of the CNT structure 13 which is attached to the outer periphery, the entire weight of the induction motor may be decreased. Further, as illustrated in FIG. 7, when forming the compound material 14 of the embodiment which has the same conductivity as those of the end rings 10 and the conductor bars 11 formed by the copper core material 19 that is set to the size of the diameter L1 necessary for the related art, the diameter L2 may be made to be smaller than the diameter L1.

Further, since the thermal loss is reduced, a decrease in the shaft output with respect to the input power may be decreased, and hence an induction motor having high efficiency may be obtained.

Accordingly, an induction motor which has a small size, a small weight, and a good efficiency may be realized.

Further, in the above-described embodiment, the conductivity may be further improved by performing the wettability improvement treatment on the CNT structure 13, and hence the electrical resistance may be further decreased. Accordingly, even when the high-frequency current concentrates on the surface of the rotor by the skin effect, the generation of heat from the end rings 10 or the conductor bars 11 may be further reduced, and hence the loss caused by the heat may be drastically reduced, whereby the efficiency of the induction motor improves.

In addition, the electrical contact between the CNT structure 13 and the copper core material may be drastically improved by impregnating the CNT structure 13 with the aluminum 16 through the vacuum-pressure impregnating method. Even in this configuration, the electrical resistance decreases, and hence the compound material having good conductivity may be obtained.

Furthermore, in the above-described embodiment, the CNT structure 13 is formed in a cylindrical shape, but may be formed in a tubular shape other than the cylindrical shape.

Further, in the above-described embodiment, an example has been described in which the CNT structure 13 is impregnated with conductive metal such as copper or aluminum and alloy thereof by pressure, but a compact may be obtained by mixing conductive metal such as copper or aluminum and alloy thereof with the CNT 15 by compact-molding.

Further, in the above-described embodiment, an example has been described in which the periphery of the conductive metal core is impregnated with conductive metal or is formed by compact-molding in a manner such that the core conductor 12 is formed by the copper core material formed from the copper bar and the CNT 15 is impregnated with aluminum as conductive metal or formed by compact-molding, but conductive metal may be disposed on the periphery of the CNT structure 13 which is impregnated with conductive metal or is formed by compact-molding.

Hereinafter, the combination of the core conductor 12 and the CNT structure 13 will be illustrated.

(1) Combination in a case where a CNT structure attached with conductive metal is disposed around a conductive core material of a center portion.

| Core conductor 12 | CNT structure |
|---|---|
| (a) Copper core material | Attachment of aluminum (embodiment and modified example) |
| (b) Aluminum core material | Attachment of copper |
| (c) Copper core material | Attachment of copper |
| (d) Aluminum core material | Attachment of aluminum |

(2) Combination in a case where a CNT structure attached with metal is disposed at a center portion and the periphery is covered by conductive metal (core conductor)

| CNT structure | Core conductor (outer peripheral conductor) |
|---|---|
| (a) Attachment of aluminum | Copper material |
| (b) Attachment of copper | Copper material |
| (c) Attachment of aluminum | Aluminum |
| (d) Attachment of copper | Aluminum |

In the above-described combinations, since the core conductor (the outer peripheral conductor) attached with copper is disposed at the outer periphery in (2) - (a) and (b), corrosion may be reduced.

Further, since the CNT structure attached with copper is disposed in the outer periphery even in the case of (1) - (b) and (c), corrosion may be reduced.

While the embodiment of the invention has been described, the invention is not limited to the above-described embodiment, and various modifications may be conducted.

## Claims

1. A rotor of an induction motor which is rotatably disposed inside a hollow portion of a stator of the induction motor and rotates under a magnetic force from a magnetic field formed inside the hollow portion by the stator, the rotor comprising:
a pair of annular conductors; and
a plurality of bar-like conductors connected between the pair of annular conductors and configured to form a basket shape along with the pair of annular conductors,
wherein the annular conductors and the bar-like conductors are respectively formed by a compound material with a conductive core conductor and a carbon nanotube structure attached to an outer periphery of the core conductor in an electric contact state.

2. The rotor of an induction motor according to claim 1, wherein the core conductor is a copper bar or an aluminum bar.

3. The rotor of an induction motor according to claim 2, wherein the carbon nanotube structure is
formed by an assembly of a plurality of carbon nanotubes,
subjected to a wettability improvement treatment by attaching a conductor formed by nano metal particles onto surfaces of the respective carbon nanotubes, into the respective carbon nanotubes, and between the respective carbon nanotubes, and
impregnated with aluminum or treated by compact-molding of aluminum in a state where the carbon nanotube structure is attached onto the outer periphery of the core conductor in a braided shape.

4. The rotor of an induction motor according to claim 2, wherein the carbon nanotube structure is
formed by an assembly of a plurality of carbon nanotubes,
subjected to a wettability improvement treatment by attaching a conductor formed by nano metal particles onto surfaces of the respective carbon nanotubes, into the respective carbon nanotubes, and between the respective carbon nanotubes, and
transversely wound on the outer periphery of the core conductor while being impregnated with aluminum or being treated by compact-molding of aluminum.

5. An induction motor comprising:
a stator configured to form a magnetic field inside a hollow portion thereof; and
a rotor rotatably disposed inside the hollow portion of the stator and configured to rotate under a magnetic force from the magnetic field formed by the stator,
wherein the rotor includes a pair of annular conductors and a plurality of bar-like conductors connected between the pair of annular conductors,
wherein the pair of annular conductors and the plurality of bar-like conductors form a basket shape, and
wherein the annular conductors and the bar-like conductors are respectively formed by a compound material with a conductive core conductor and a carbon nanotube structure attached to an outer periphery of the core conductor in an electric contact state.
